# EUROPEAN PATENT SPECIFICATION

(11) **EP 3 867 045 B1**
(45) Date of publication and mention of the grant of the patent: **01.05.2024**
(21) Application number: 19802257.6
(22) Date of filing: 15.10.2019
(51) Int. Cl.: B29C 70/34, B29C 70/48, B29C 70/06, A43B 23/02, B29L 31/50, B29K 63/00, B29K 105/08, B29C 70/22, B29D 35/12

(54) **A MANUFACTURE ITEM WITH A THREE-DIMENSIONAL PROFILE MADE OF A COMPOSITE MATERIAL, METHOD OF MANUFACTURING AND INTERMEDIATE WORKING ELEMENT OF SUCH ITEM**
EIN HERGESTELLTES EINZELTEIL MIT EINEM DREIDIMENSIONALEN PROFIL AUS EINEM VERBUNDWERKSTOFF, VERFAHREN ZUR HERSTELLUNG UND ZWISCHENBEARBEITUNG EINES SOLCHEN EINZELTEILS
ARTICLE FABRIQUÉ AVEC UN PROFIL TRIDIMENSIONNEL EN MATÉRIAU COMPOSITE, SON PROCÉDÉ DE FABRICATION ET ÉLÉMENT DE TRAVAIL INTERMÉDIAIRE DE CET ARTICLE

(30) Priority: 16.10.2018 IT 201800009487
(43) Date of publication of application: 25.08.2021
(73) Proprietor: CDZ Compositi S.r.l., 32031 Alano di Piave (BL) (IT)
(72) Inventor: MORELLATO, Mauro, 31040 Trevignano (TV) (IT)
(74) Representative: Dragotti & Associati S.R.L.
(86) International application number: PCT/IB2019/058768
(87) International publication number: WO 2020/079579

(56) References cited:
- CN-A- 105 086 376
- US-A1- 2011 151 206
- US-A1- 2015 044 924
- US-B1- 6 447 705

## Description

The present invention relates to the production of manufactured items with a three-dimensional profile made of composite material.

In particular, the present invention relates to a manufactured item with a three-dimensional profile made of a composite material, the manufactured item being preferably an upper for footwear. Alternatively, the manufactured item may consist of a bag or clothing components, interior fittings of a motorcar, furniture or devices for protecting a user's body.

The present invention relates, moreover, to a method of manufacturing the manufactured item with a three-dimensional profile and an intermediate working element for making the manufactured item in accordance with a particular embodiment. Related manufactured items and methods of manufacturing them are described in patent documents US6447705B1, US2011/151206A1, CN105086376A and US2015/044924A1.

The expression "composite material" indicates both generally and in the continuation of the present description a material consisting of the joining together of two or more elements, for example a matrix and a reinforcement or fibre.

The matrix may be of the thermosetting type or may be chosen from the group comprising, for example, epoxy resins, polyurethane resins, polyamide resins, phenolic reins, amide resins, polyester resins, vinyl-ester resins and acrylic resins.

Alternatively, the matrix may be of the thermoplastic type and may be chosen from the group comprising polyamide, polypropylene, polyethylene, polycarbonate, polystyrene, polyvinyl chloride, polyether ether ketone (PEEK), ABS or polyurethane.

The so-called reinforcement may be chosen, for example, from the group comprising carbon fibre, glass fibre, basalt fibre, boron fibre, synthetic fibres such as aramid fibres, artificial fibres such as rubber latex, cellulose acetate and nylon or natural fibres such as linen, hemp, jute and bamboo, coconut, cotton and sisal fibres.

The present invention concerns in particular the choice of a composite material suitable for the manufacturing of uppers for footwear, preferably football boots.

The process for manufacturing such footwear involves the various parts of the upper being cut on the flat from rolls or sheets or slabs and then being assembled by means of gluing and/or hemming.

The upper thus assembled is mounted on a form and then fixed or sewn onto a mounting insole. The sole is then glued onto the upper/insole assembly. At the end of the assembly and gluing steps the form is removed and the shoe completed.

Usually, the uppers are made of elastic and soft materials, such as certain types of natural leathers, or synthetic materials, able to adapt easily to the shape of the mounting form and the user's foot during use.

The upper may be made from a carbon-fibre fabric. However, the carbon-fibre fabric must be necessarily combined or impregnated with a resin or a resin film and/or with a stabilization film, namely a matrix, before being cut and formed.

In fact, a dry carbon-fibre fabric, if it is not combined or impregnated with a matrix, tends to break up during the cutting and forming operations.

Methods for forming carbon-fibre fabrics for the manufacture of uppers are known, for example, from the documents EP2180803 and US2016/0286898.

EP2180803 describes a method for thermoforming on the flat a thin film of TPU positioned above and below a carbon-fibre fabric for the manufacture of footwear uppers.

US2016/0286898 describes a method for manufacturing uppers for footwear comprising a step of weaving the carbon-fibre with the form and the size of the intermediate working element of the upper, a step of impregnating the latter with a photo-polymerizing or thermosetting epoxy resin and a step of photo-polymerizing the resin by means of UVA lamps for the photo-polymerizing resin and by means of an oven for the thermosetting epoxy resin.

The methods described above, while being widely used, are not without drawbacks.

A first drawback consists in the formation of air pockets following joining and thermoforming of the carbon-fibre fabric with the TPU films or between the carbon-fibre fabric and the resin after polymerization. This drawback results in a final appearance of the upper which is not acceptable.

As regards EP2180803, a further drawback consists in the fact that the carbon-fibre fabric joined and thermoformed with the TPU films has, during mounting on the form, puckers and folds along the curved portions of the upper, in particular in the toe and heel regions.

As regards US2016/0286898, another drawback consists in the fact that the weaving style and the matrix polymerization and impregnation methods are such that they do not allow a regular "carbon look" finish to be obtained, namely with classic twill, plain or satin styles, particularly popular in the sports sector.

Furthermore, composite materials of this type, following the cross-linking reaction, are not very flexible or able to be shaped and have a low resistance to UV rays.

The main object of the present invention is to provide a manufactured item with a three-dimensional profile made of a composite material, an intermediate working element of the manufactured item and a method of manufacturing the manufactured item, which are able to overcome the drawbacks mentioned above.

A particular task of the present invention is to provide a manufactured item with a three-dimensional profile made of a composite material, which has a greater flexibility than the common manufactured items which are made with composite materials.

Another task of the present invention is to provide a manufactured item with a three-dimensional profile made of a composite material, in which the resin has a smaller elastic modulus, a greater elongation and a form memory.

A further task of the present invention is to provide a manufactured item with a three-dimensional profile made of a composite material, which is particularly resistant to abrasion and cutting.

Another task of the present invention is to provide a manufactured item with a three-dimensional profile made of a composite material, which is particularly resistant to UV rays.

A further task of the present invention is to provide a manufactured item with a three-dimensional profile made of a composite material, which has a high degree of impermeability.

Furthermore, a task of the present invention is to provide a method of manufacturing a manufactured item with a three-dimensional profile made of a composite material, which allows a manufactured item without puckers and/or folds along the curved portions to be obtained.

Another task of the present invention is to provide a method of manufacturing a manufactured item with a three-dimensional profile made of a composite material, which allows a manufactured item to be obtained without visible air pockets between the matrix and the reinforcement.

Finally, a further task of the present invention is to provide an intermediate working element of a manufactured item with a three-dimensional profile made of a composite material, which ensures homogeneous impregnation of the fabric with the resin.

Another task of the present invention is to provide a method for manufacturing a manufactured item with a three-dimensional profile made of a composite material, which allows cutting, milling, gluing, sewing, bossing and micro-perforation of the composite material following cross-linking of the resin.

The object and the main tasks described above are achieved by means of a manufactured item with a three-dimensional profile made of a composite material according to claim 1, an intermediate working element of the manufactured item according to claim 9 and a method of manufacturing the manufactured item according to claim 10.

In order to illustrate more clearly the innovative principles of the present invention and its advantages compared to the prior art, an example of embodiment will be described below with the aid of the accompanying drawings. In the drawings:
- Figures 1 and 2 show schematic perspective views from two different viewpoints of an embodiment of a manufactured item with a three-dimensional profile, in particular a footwear upper, made of composite material in accordance with the present invention;
- Figure 3 shows a perspective view of the reinforcing member, in particular a carbon-fibre fabric, of the manufactured item shown in Figure 1;
- Figures 4a-4e show perspective views of various steps of the method for manufacturing the manufactured item in accordance with the present invention;
- Figure 5a shows a cross-sectioned side view of the closed mould with the reinforcing member of the manufactured item inserted inside it and impregnated with a resin;
- Figure 5b shows a view, on a larger scale, of a detail of Figure 5a.

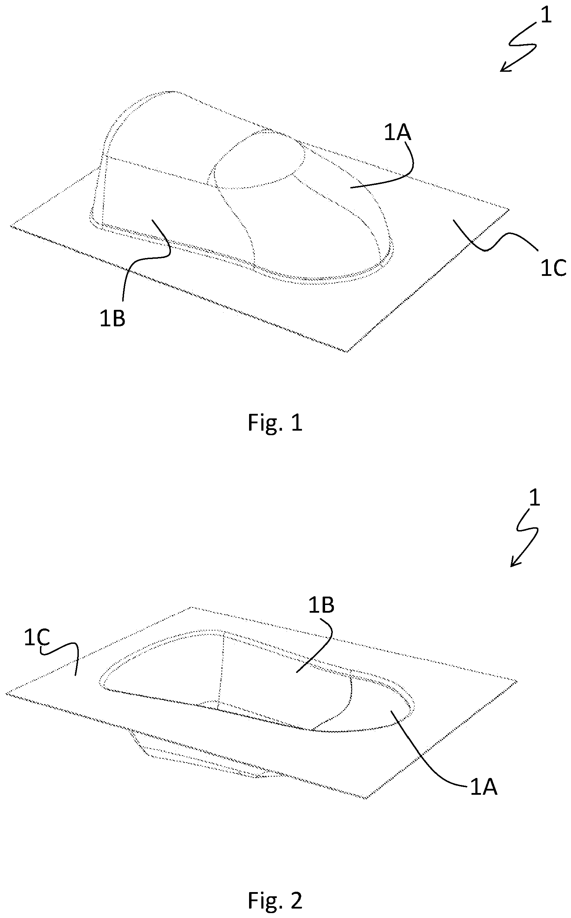

With reference to the attached figures, in particular Figures 1 and 2, the present invention refers to a manufactured item with a three-dimensional profile made of a composite material, denoted generally by the reference number 1.

Preferably, the manufactured item 1 is intended to form an upper for footwear, for example for football boots. For this purpose, Figures 1, 2 and 4e illustrate in schematic form the manufactured item 1 having the form of a footwear upper, comprising a toe portion 1A and a central portion 1B. Advantageously, the manufactured item 1 may be intended also for different uses, for example it may be intended to form a bag, a clothing accessory or other similar products which must have, like an upper, a particularly high degree of flexibility and which at the same time must retain a given form.

As described clearly below, the manufactured item 1 may be made by means of moulding and its form may complement that of the cavity of the mould 2 with which it is formed, "cavity" being understood as meaning the volume defined (when the mould is closed) between the die and the punch of the mould.

In a manner known per se, a different three-dimensional form of the manufactured item, for example of the type indicated above, may be obtained by modifying the cavity of the mould 2.

Furthermore, trimming operations may be carried out, for example on a perimetral portion 1C of the manufactured item comprising excess material, once the step involving moulding and cross-linking of the composite material has been completed.

The composite material of the manufactured item 1 comprises a reinforcing member and a matrix. In accordance with the present invention, the manufactured item 1 comprises a reinforcing member 3 chosen from the group comprising carbon fibre, glass fibre, basalt fibre, boron fibre, synthetic fibres, artificial fibres and natural fibres, and an epoxy resin 10 which forms the matrix.

The epoxy resin 10 may be of the thermosetting type and may be obtained by mixing and cross-linking component designed to be cross-linked with a cross-linking catalyst.

For example, the reinforcing member 3 may be chosen from the group of synthetic fibres comprising Kevlar^{®} and Zylon^{®}. These two materials make the manufactured item particularly resistant to cutting.

Alternatively, the reinforcing member 3 may be made of natural fibre and may be chosen from the group comprising linen fibres, hemp fibres, jute fibres, bamboo fibres, coconut fibres, cotton fibres and sisal fibres.

Moreover, the reinforcing member 3 may be chosen from the group of artificial fibres comprising, for example, rubber latex, cellulose acetate, nylon or other similar materials.

In a preferred but non-limiting embodiment of the invention, the reinforcing member 3 is a carbon-fibre fabric. Below, the description will refer solely to the carbon-fibre fabric as reinforcing member, without this limiting the scope of protection of the present invention.

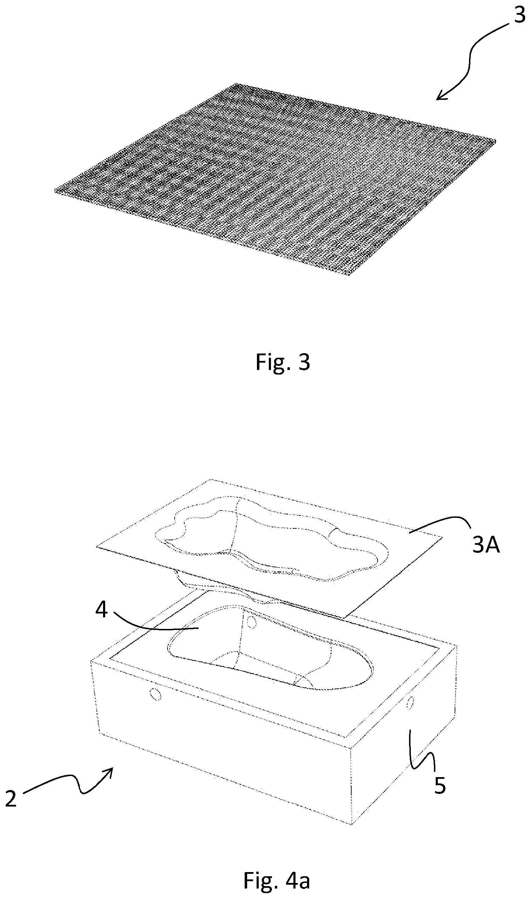

For better dimensional stabilization, the carbon-fibre fabric 3, which is shown more clearly in Figure 3, may be first combined with an additional fabric made of polymer material or carbon fibre, glass fibre or aramid fibre. Alternatively, the carbon-fibre fabric may be treated with bonding agents or using other surface treatments.

The combination with the additional polymer, glass fibre, carbon or aramid fibre fabric limits mainly the distortion of the weft of the carbon-fibre fabric, while the treatments increase the adhesion between the carbon fibre and matrix, increase the wettability of the carbon fibre with respect to the matrix and protect the surface of the carbon fibre from moisture.

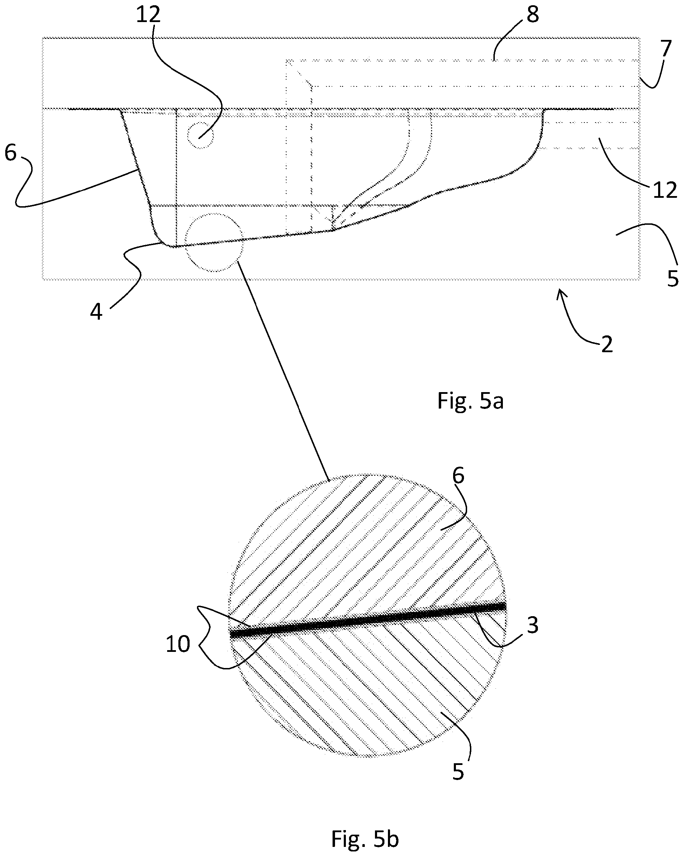

In turn the epoxy resin 10 is suitable for being used to impregnate the carbon-fibre fabric 3, as shown more clearly in Figures 5a and 5b
In a manner known per se, the catalyst promotes the polymerization and the cross-linking of the cross-linkable component so as to obtain the epoxy resin 10 in certain operating conditions, for example within given temperature and pressure ranges, or following exposure for a given period of time to UVA rays of predetermined intensity, depending on the composition of the resin and the characteristics to be obtained.

In a preferred non-limiting embodiment of the invention, the cross-linking of the resin 10 occurs as a result of the heat and at the end of cross-linking the resin may have characteristics of the type described below.

Advantageously, the epoxy resin 10 according to the present invention, once the cross-linking process has been terminated, may have a Shore A hardness of between 30 and 100. Preferably, the Shore A hardness range of the epoxy resin may be between 40 and 90.

For the purposes of the present invention the hardness is measured at room temperature according to the ISO 868 standard by means of penetration of a hardness gauge with frustoconical tip in an already cross-linked sample of epoxy resin.

In this connection it should be noted that the hardness of the epoxy resin was indicated with reference to the Shore A hardness scale, and not the Shore D hardness scale, as commonly occurs for thermosetting resins.

The Shore A hardness values indicated above correspond to a Shore D hardness value of between 6 and 58, preferably between 8 and 40 at room temperature (in accordance with the standards DIN53505, ISO868 EN, ASTM D2240) and therefore to values significantly lower than the common thermosetting epoxy resins used for these purposes.

These hardness values of the epoxy resin correspond to a smaller modulus of elasticity of the composite material and a greater flexibility thereof.

Advantageously, the manufactured item 1 according to the present invention has an elastic behaviour, being able to resume its initial form when it is no longer acted by any force, for example a shearing or compressive force.

For this reason, the manufactured item 1 according to the present invention is particularly suitable for manufacturing uppers for footwear. In particular, the epoxy resin 10, at the end of cross-linking, has a mechanical behaviour which is very similar to that of a polyurethane elastomer, with the further advantage of being resistant to thermal stresses, to abrasion, to cutting and to UV rays and with an optimum transparency and shininess.

In the case where the manufactured item 1 consists of a footwear upper, the latter may be formed by suitably shaping the composite starting material, without having to perform gluing and/or hemming, with the advantage that its outer surface will be smooth and without puckers and folds, in particular along the curved portions such as the toe and heel.

In the case where a given detail or component must be assembled together with the upper, the latter may be perforated, punched, sewn, glued and over-injected by means of an injection process in view of the chemical compatibility with other polymers.

Moreover, the epoxy resin 10, when it is still in the liquid state, i.e. before the cross-linking reaction has terminated, may have a predetermined viscosity at 25°C (room temperature), known to the person skilled in the art.

For example, the viscosity of the resin at room temperature may be within the range of 180 to 50,000 mPa·s.

The viscosity value is particularly relevant during the process for manufacture of the manufactured item, as described more fully below, while the hardness is particularly relevant as regards the final flexibility of the manufactured item 1.

A non-limiting example of epoxy resin 10, which may be used to obtain a manufactured item with the characteristics indicated above, consists of a resin comprising a cross-linkable component based on bisphenol-A, in particular bisphenol-A-diglycidyl ether.

The catalyst for cross-linking said cross-linkable component preferably consists of an amine, preferably a polyetheramine.

The weight ratio between cross-linkable component and cross-linking catalyst, for example, may be 1:1, but also different depending on the common knowledge known to the person skilled in the art.

In the case where the mixing ratio between cross-linkable component and cross-linking catalyst is 1:1, the resultant epoxy resin has a Shore A hardness value of about 75-80.

Some types of thermosetting epoxy resins similar to that indicated above may be selected for manufacture of the manufactured item, provided that their hardness and their viscosity are within the range indicated above.

Advantageously, the composite-material manufactured item 1 may be obtained from an intermediate working element, not shown in the figures, by means of moulding.

The intermediate element may comprise a reinforcing member 3 chosen from the group comprising carbon fibre, glass fibre, basalt fibre, boron fibre, synthetic fibres, artificial fibres and natural fibres, of the type described above, impregnated with a mixture comprising a cross-linkable component and a cross-linking catalyst before the step for moulding and therefore cross-linking the resin 10.

In accordance with the present invention, a method for manufacturing the manufactured item 1 with a three-dimensional profile according to the present invention is also provided.

The method comprises a step a) of providing at least one reinforcing member 3 chosen from the group comprising carbon fibre, glass fibre, basalt fibre, boron fibre, synthetic fibres, artificial fibres and natural fibres and a component designed to be cross-linked a cross-linking catalyst, the cross-linkable component and the cross-linking catalyst being designed to form an epoxy resin 10, and a step b) of impregnating the reinforcing member 3 with a mixture of the cross-linkable component and the cross-linking catalyst.

Preferably, as already described above, the reinforcing member 3 may be formed by a carbon-fibre fabric.

The carbon-fibre fabric 3 may have predetermined dimensions and forms and may be obtained by means of cutting from a roll, a reel or a sheet or slab, not shown in the figures, or starting with a previously formed three-dimensional form, not shown in the figures.

The method also involves a step c) of cross-linking the cross-linkable component of the epoxy resin 10 inside a cavity of a mould 2 shaped in the form of the manufactured item 1 to be made and a step d) of removing the manufactured item 1 from the cavity of the mould 2 after cross-linking.

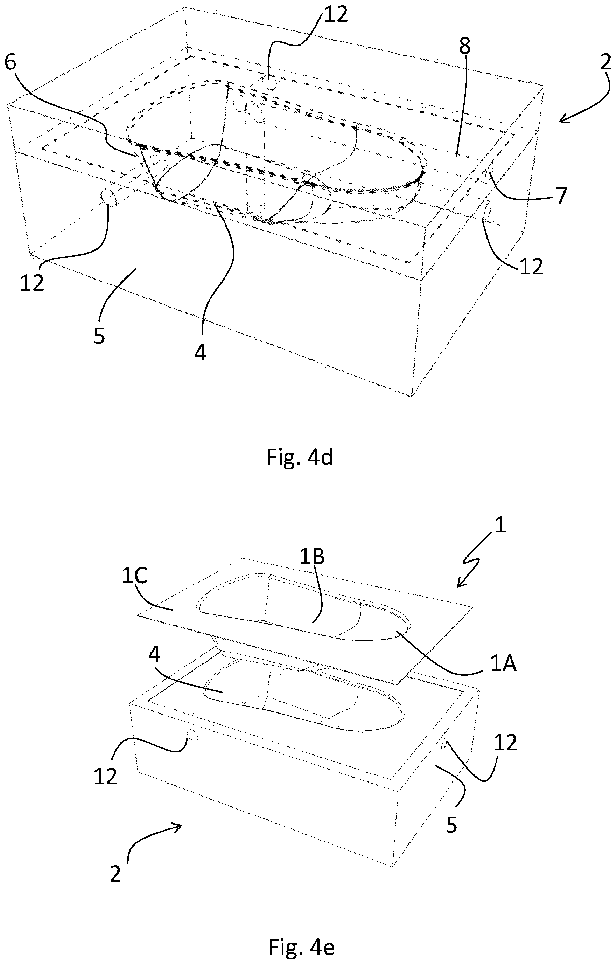

The mould is shown in Figures 4a to 4e and 5a and comprises a die 5 with an impression 4 and a cover with a punch 6 designed to be inserted inside the impression 4 in order to define the cavity of the mould, inside which the carbon-fibre fabric 3 is loaded, and in order to apply pressure on the latter.

The die 5 of the mould 2 may be fixed to the bottom surface of a vertical electric or hydraulic press with heated surfaces, not shown in the Figures, while the cover may be fixed to the top surface of the press, also not shown in the figures.

Conveniently, both the die 5 and the cover 6 may be kept at a constant temperature of between 85°C and 160°C and preferably close to 130°C, so as to favour cross-linking of the cross-linkable component of the resin 10 during moulding.

In a first mode of implementation of the method, the impregnation step b) may be performed, on the flat or by means of an industrial impregnation process, outside of the mould 2 so as to form an intermediate working element, of the type described above.

In an alternative mode of implementation, the impregnation step b) outside the mould 2 may be performed by impregnating two separate portions of the reinforcing member 3, with two resins having mechanical characteristics and a hardness which are different after cross-linking. In particular, at least one of the portions of the reinforcing member 3 may be impregnated with the mixture described above.

In this way, after loading into the mould 2, moulding and then cross-linking, the two reinforcing portions 3, which are respectively impregnated with different types of resin, will be bonded together as a result of the chemical compatibility between the resins, with the advantage that a portion of the manufactured item 1 may have a hardness and/or a rigidity which is greater than or less than that of another portion of the manufactured item 1 depending on the type of resin used.

Alternatively, a rigid zone of the manufactured item 1 may be obtained by locally inserting a low-density polymer material. The low-density polymer material may be arranged between one or more layers of reinforcing member 3.

After cross-linking of the resin, the manufactured item will have, as described above, a Shore A hardness of between 30 and 100, while in the zone where the low-density polymer material has been inserted, the manufactured item 1 will have a greater hardness and rigidity.

Moreover, a step e) of loading the intermediate working element inside the cavity of the mould 2 may be envisaged. The loading step e) will be performed after the impregnation step b) and before the cross-linking step c). If necessary, the intermediate working element loaded into the mould 2 may be combined, in view of its chemico-physical compatibility, with another manufactured item in a new curing cycle.

According to a further alternative, not shown in the figures, the mould 2 is inserted and placed under a vacuum inside a special vacuum bag. Then the bag with the mould will in turn be inserted and kept inside an autoclave, not shown in the figures, for a heating cycle at a temperature of up to 130°C inside a pressurized chamber at about 6 bar for one hour and then cooled.

This moulding method has a greater duration, but allows an article 1 without air pockets to be obtained.

In a second mode of implementation of the method, the impregnation step b) may be performed inside the cavity of the mould 2, as shown in Figures 5a and 5b.

Moreover, a step e) of loading the reinforcing member 3, in particular the carbon-fibre fabric, inside the cavity of the mould 2 may be provided. This loading step e) may be performed before the impregnation step b).

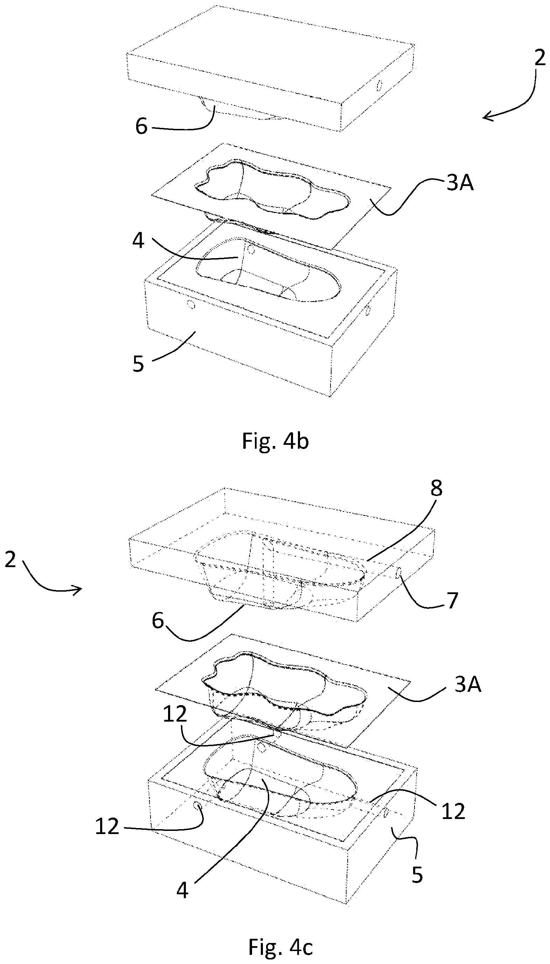

For this purpose, the cover of the mould 2 comprising the punch 6 may have an injection point 7, an injection channel 8 in fluid connection with the cavity of the mould 2 for supplying in fluid form the resin 10 inside it, as shown in Figures 4c, 4d and 5a.

Moreover, the die 5 may comprise one or more breather channels 12, shown in Figures 4c, 4d and 5a, which are connected to the impression 4 and are intended to evacuate the air present inside the impression 4 at the time of injection of the resin 10 and for discharging any excess resin.

In the case of manufacture of an upper for an average shoe size, the amount of resin supplied inside the mould 2 is in the region, for example, of 20-50 g. In this case, the mould 2 is kept closed for about 15 minutes at a pressure of about 100 bar.

The impregnation step b) may also be performed by means of injection of a mixture of the cross-linkable component and the cross-linking catalyst inside the mould cavity, by means of a static pump with an adjustable setting factor and comprising two tanks.

This pump is not shown in the figures, being well-known to the person skilled in the art. A single pump may be used to perform the injection step on several moulds in sequence.

Alternatively, the impregnation step b) may be performed by means of vacuum infusion of a mixture of the cross-linkable component and the cross-linking catalyst inside the cavity of the mould 2, for which purpose the mould 2 must be provided with one or more inlet/injection points 7 for the resin 10 as well as one or more output or breather channels 12 connected to a tank, and therefore to the vacuum pump, not shown in the figures.

According to an alternative to the method described above, not shown in the figures, a mould 2 without the punch and a vacuum bag with associated points for injection and discharging of the air and the resin may be used.

According to a further embodiment, not shown in the figures, the impregnation step b) inside the mould 2 may be performed by pouring the epoxy resin 10 onto the carbon-fibre fabric 3 inserted inside the mould 2, while the latter is still open.

The characteristic feature which distinguishes the above-described impregnation steps performed on the outside of or inside the mould 2 is the viscosity of the resin not yet cross-linked at room temperature, which must in any case be kept within the aforementioned range.

The resin present in the material impregnated outside the mould (industrial process pre-preg) must have a viscosity at room temperature higher than that of the resin used for the impregnation step performed by means of injection or infusion.

For example, the viscosity of the resin used for impregnating the reinforcing member 3 outside the mould may be, during the impregnation step, between 180 and 200 mPa·s and then increase up to a predetermined value at room temperature, so as to ensure good workability during cutting and preforming of the pre-impregnated material.

The increase in viscosity may be induced by separation and/or evaporation of the solvents contained in the mixture comprising the cross-linkable component and the catalyst and/or by cooling the mixture at the end of the impregnation of the carbon-fibre fabric 3.

On the other hand, the viscosity value of the resin used for the impregnation processes by means of injection or infusion must be lower than that of the resin not cross-linked at room temperature, described above, since the resin must flow rapidly inside the mould 2 and uniformly impregnate the reinforcing member 3.

Moreover, the step e) may involve loading several reinforcing members 3 inside the same mould 2 for manufacture of the manufactured item 1, both when impregnation is performed outside the mould and inside the mould.

Therefore, the reinforcing members 3 will be joined together and/or combined during the step for moulding and polymerization of the resin 10.

Furthermore, before the loading step e), a step f) involving pre-forming of the reinforcing member 3 or the intermediate working member 3 may be provided, so that the latter has a predetermined form, as shown in Figures 4a and 4b.

For example, the form of the pre-formed reinforcing member 3A may be that of the finished manufactured item. Advantageously, the pre-forming of the reinforcing member may be performed during weaving thereof and before it is impregnated.

Moreover, before cutting, pre-forming and insertion into the mould 2, the reinforcing member 3, in particular the pre-impregnated or dry (not impregnated) carbon-fibre fabric, may be stabilized by means of combining with a fabric consisting of polymer material or alternatively carbon fibre, glass fibre or aramid fibre material, not shown in the figures.

Alternatively, the carbon-fibre fabric 3 may be treated superficially, before impregnation, with bonding agents or other surface treatment agents suitable for favouring impregnation of the fabric with the resin as explained above. Such treatment is not shown in the figures.

The pre-formed fabric 3A shown in Figure 4a, before insertion in the mould 2, may therefore be both the intermediate working element of the first embodiment and the dry fabric of the second embodiment.

Advantageously, the manufactured item 1, in particular an upper, may be co-moulded in combination with other components of footwear, for example a part of the sole, the reinforcement or the upper, using the same mould 2 described above.

Such a process is made possible by the chemico-physical compatibility of the epoxy resin with the component of the footwear, for example made of TPU or polyamide.

Alternatively, the manufactured item 1 or a portion thereof may be over-injected with polymer material by means of an injection process.

Moreover, the composite material may undergo cutting, milling, hemming, bossing and micro-perforation operations, also following polymerization of the resin, in order to improve the breathability of the manufactured item.

In addition, the resin may be coloured by the addition of pigments, while maintaining a certain transparency in the finished article.

Advantageously, the finished manufactured item 1 may comprise one or more graphic elements, such as silkscreen printed films or adhesives, included in the polymerized resin on top of the reinforcing member 3.

The graphic elements may be loaded inside the mould 2 before loading of the reinforcing member 3, or the impregnated intermediate element, or may be glued onto the outer surface of the pre-formed, dry or pre-impregnated reinforcing member, before it is loaded into the mould.

The manufactured item, following cross-linking of the resin and extraction from the mould, may be subject to further tampography, "cubic printing", sublimation or other similar processing operations.

For further surface protection, for example protection of the graphics provided by means of tampography or sublimation, or for further protection against UV rays, the manufactured item is suitable for being painted and polished.

From the above, it is now clear how the manufactured item made of composite material, the intermediate working element and the method of manufacturing the manufactured item according to the present invention are advantageously able to achieve the predefined objects.

In particular, it is clear how the manufactured item with a three-dimensional profile made of composite material has a greater flexibility than the known manufactured items in the sector and made using other types of matrices.

In fact, the manufactured item made as described above has a high resistance to abrasion, cutting, UV rays and heat.

Moreover, the method of manufacturing the manufactured item is able to prevent the formation of visible air pockets between the matrix and the reinforcement between the resin and the fabric and the formation of puckers or folds along the curved portions of the manufactured item.

In fact, with the use of a particular thermosetting resin of the type indicated above it is possible to achieve homogeneous impregnation of the carbon-fibre fabric.

## Claims

1. A manufactured item (1) with a three-dimensional profile made of a composite material, which item (1) comprises:
- at least one reinforcing member (3) chosen from the group comprising carbon fibre, glass fibre, basalt fibre, boron fibre, synthetic fibres, artificial fibres and natural fibres;
- an epoxy resin (10) formed by a cross-linking reaction of a component cross designed to be cross linked with a cross-linking catalyst;
**characterized in that** said epoxy resin (10) has a final Shore A hardness of between 30 and 100 and **in that** said epoxy resin (10) has a viscosity of between 180 and 50,000 mPa·s at room temperature and before the cross-linking reaction.

2. Item (1) according to claim 1, **characterized in that** said epoxy resin (10) has a final Shore A hardness of between 40 and 90.

3. Item (1) according to claim 1, **characterized in that** said epoxy resin (10) comprises a cross-linkable component which is based on bisphenol A.

4. Item (1) according to claim 3, **characterized in that** said epoxy resin (10) comprises a cross-linkable component which is based on bisphenol A diglycidyl ether.

5. Item (1) according to claim 1, **characterized in that** said cross-linking catalyst is an amine, preferably a polyetheramine.

6. Item according to claim 1, **characterized in that** said reinforcing member (3) is chosen from the group of synthetic fibres comprising Kevlar^{®} and Zylon^{®}.

7. Item according to claim 1, **characterized in that** said reinforcing member (3) is a carbon-fibre fabric.

8. Item according to claim 1, **characterized in that** said reinforcing member (3) is chosen from the group of natural fibres comprising linen fibres, hemp fibres, jute fibres, bamboo fibres, coconut fibres, cotton fibres and sisal fibres.

9. An intermediate working element for manufacturing by moulding an item (1) with a three-dimensional profile made of a composite material, which intermediate element comprises:
- at least one reinforcing member (3) chosen from the group comprising carbon fibre, glass fibre, basalt fibre, boron fibre, synthetic fibres, artificial fibres and natural fibres;
- a component of an epoxy resin (10) designed to be cross-linked and a catalyst for cross-linking said cross-linkable component;
wherein said reinforcing member (3) is impregnated with said cross-linkable component and said cross-linking catalyst before the moulding step;
**characterized in that** said epoxy resin (10) has a final Shore A hardness of between 30 and 100 and **in that** said epoxy resin (10) has a viscosity of between 180 and 50,000 mPa·s at room temperature and before the cross-linking reaction.

10. A method for manufacturing an item (1) with a three-dimensional profile made of a composite material, which method comprises the following steps:
a) providing at least one reinforcing member (3) chosen from the group comprising carbon fibre, glass fibre, basalt fibre, boron fibre, synthetic fibres, artificial fibres and natural fibres and a component cross-linkable with a cross-linking catalyst; the cross-linkable component and the catalyst being designed to form an epoxy resin (10);
b) impregnating the reinforcing member (3) with a mixture of said cross-linkable component and said cross-linking catalyst;
c) cross-linking said cross-linkable component of the epoxy resin (10) inside a cavity of a mould (2) which is shaped according to the shape of the item (1) to be manufactured;
d) removing the item (1) from the cavity of the mould (2);
**characterized in that** said epoxy resin (10) formed in said cross-linking step c) has a final Shore A hardness of between 30 and 100 and
**in that** said epoxy resin (10) has a viscosity of between 180 and 50,000 mPa·s at room temperature and before the cross-linking reaction.

11. Method according to claim 10, **characterized in that** the epoxy resin (10) formed in said cross-linking step c) has a Shore A hardness of between 40 and 90.

12. Method according to claim 10, **characterized in that** said impregnation step is performed on the flat outside said mould (2), using a impregnation line, to form an intermediate working element, a step e) of loading the intermediate element into the cavity of said mould (2) before said cross-linking step c) being provided.

13. Method according to claim 10, **characterized in that** said impregnation step b) is performed inside the cavity of the mould (2), a step e) of loading the reinforcing member (3) into the cavity of the mould before said impregnation step b) being provided.

14. Method according to claim 10, **characterized in that**, before said impregnation step b), a step f) of pre-forming said reinforcing member (3) is provided.

## Patentansprüche

1. Hergestellter Artikel (1) mit einem dreidimensionalen Profil, der aus einem Verbundmaterial hergestellt ist, wobei der Artikel (1) umfasst:
- mindestens ein Verstärkungselement (3), das aus der Gruppe ausgewählt ist, die Kohlenstofffaser, Glasfaser, Basaltfaser, Borfaser, Synthesefasern, Kunstfasern und Naturfasern umfasst;
- ein Epoxidharz (10), das durch eine Vernetzungsreaktion einer Komponentenvernetzung gebildet ist, die dazu ausgelegt ist, mit einem Vernetzungskatalysator vernetzt zu sein;
**dadurch gekennzeichnet, dass** das Epoxidharz (10) eine endgültige Shore-A-Härte zwischen 30 und 100 aufweist und dass das Epoxidharz (10) eine Viskosität zwischen 180 und 50.000 mPa·s bei Raumtemperatur und vor der Vernetzungsreaktion aufweist.

2. Artikel (1) nach Anspruch 1, **dadurch gekennzeichnet, dass** das Epoxidharz (10) eine endgültige Shore-A-Härte zwischen 40 und 90 aufweist.

3. Artikel (1) nach Anspruch 1, **dadurch gekennzeichnet, dass** das Epoxidharz (10) eine vernetzbare Komponente umfasst, die auf Bisphenol A basiert.

4. Artikel (1) nach Anspruch 3, **dadurch gekennzeichnet, dass** das Epoxidharz (10) eine vernetzbare Komponente umfasst, die auf Bisphenol-A-Diglycidylether basiert.

5. Artikel (1) nach Anspruch 1, **dadurch gekennzeichnet, dass** der Vernetzungskatalysator ein Amin, bevorzugt ein Polyetheramin ist.

6. Artikel nach Anspruch 1, **dadurch gekennzeichnet, dass** das Verstärkungselement (3) aus der Gruppe von Synthesefasern ausgewählt ist, die Kevlar^{®} und Zylon^{®} umfasst.

7. Artikel nach Anspruch 1, **dadurch gekennzeichnet, dass** das Verstärkungselement (3) ein Kohlenstofffasergewebe ist.

8. Artikel nach Anspruch 1, **dadurch gekennzeichnet, dass** das Verstärkungselement (3) aus der Gruppe von Naturfasern ausgewählt ist, die Leinenfasern, Hanffasern, Jutefasern, Bambusfasern, Kokosfasern, Baumwollfasern und Sisalfasern umfasst.

9. Zwischenarbeitselement zur Herstellung durch Formen eines Artikels (1) mit einem dreidimensionalen Profil aus einem Verbundmaterial, wobei das Zwischenelement umfasst:
- mindestens ein Verstärkungselement (3), das aus der Gruppe ausgewählt ist, die Kohlenstofffaser, Glasfaser, Basaltfaser, Borfaser, Synthesefasern, Kunstfasern und Naturfasern umfasst;
- eine Komponente aus einem Epoxidharz (10), die dazu bestimmt ist, vernetzt zu werden, und einen Katalysator zum Vernetzen der vernetzbaren Komponente;
wobei das Verstärkungselement (3) vor dem Formschritt mit der vernetzbaren Komponente und dem Vernetzungskatalysator imprägniert wird;
**dadurch gekennzeichnet, dass** das Epoxidharz (10) eine endgültige Shore-A-Härte zwischen 30 und 100 aufweist und dass das Epoxidharz (10) eine Viskosität zwischen 180 und 50.000 mPa·s bei Raumtemperatur und vor der Vernetzungsreaktion aufweist.

10. Verfahren zur Herstellung eines Artikels (1) mit einem dreidimensionalen Profil, der aus einem Verbundwerkstoff hergestellt ist, wobei das Verfahren die folgenden Schritte umfasst:
a) Bereitstellen mindestens eines Verstärkungselements (3), das aus der Gruppe ausgewählt ist, die Kohlenstofffaser, Glasfaser, Basaltfaser, Borfaser, Synthesefasern, Kunstfasern und Naturfasern und eine mit einem Vernetzungskatalysator vernetzbare Komponente umfasst; wobei die vernetzbare Komponente und der Katalysator dazu ausgelegt sind, ein Epoxidharz (10) zu bilden;
b) Imprägnieren des Verstärkungselements (3) mit einer Mischung aus der vernetzbaren Komponente und dem Vernetzungskatalysator;
c) Vernetzen der vernetzbaren Komponente des Epoxidharzes (10) in einem Hohlraum einer Form (2), die gemäß der Form des herzustellenden Artikels (1) geformt ist;
d) Entfernen des Artikels (1) aus dem Hohlraum der Form (2) ;
**dadurch gekennzeichnet, dass** das in dem Vernetzungsschritt c) gebildete Epoxidharz (10) eine endgültige Shore-A-Härte zwischen 30 und 100 aufweist, und
dass das Epoxidharz (10) bei Raumtemperatur und vor der Vernetzungsreaktion eine Viskosität zwischen 180 und 50.000 mPa·s aufweist.

11. Verfahren nach Anspruch 10, **dadurch gekennzeichnet, dass** das in dem Vernetzungsschritt c) gebildete Epoxidharz (10) eine Shore-A-Härte zwischen 40 und 90 aufweist.

12. Verfahren nach Anspruch 10, **dadurch gekennzeichnet, dass** der Imprägnierschritt an der flachen Außenseite der Form (2) unter Verwendung einer Imprägnierlinie durchgeführt wird, um ein Zwischenarbeitselement zu bilden, wobei ein Schritt e) des Ladens des Zwischenelements in den Hohlraum der Form (2) vor dem Vernetzungsschritt c) bereitgestellt wird.

13. Verfahren nach Anspruch 10, **dadurch gekennzeichnet, dass** der Imprägnierschritt b) innerhalb des Hohlraums der Form (2) durchgeführt wird, wobei ein Schritt e) des Ladens des Verstärkungselements (3) in den Hohlraum der Form vor dem Imprägnierschritt b) bereitgestellt wird.

14. Verfahren nach Anspruch 10, **dadurch gekennzeichnet, dass** vor dem Imprägnierschritt b) ein Schritt f) des Vorformens des Verstärkungselements (3) bereitgestellt wird.

## Revendications

1. Article manufacturé (1) avec un profil tridimensionnel en matériau composite, article (1) qui comprend:
- au moins un élément de renforcement (3) choisi dans le groupe comprenant la fibre de carbone, la fibre de verre, la fibre de basalte, la fibre de bore, les fibres synthétiques, les fibres artificielles et les fibres naturelles ;
- une résine époxy (10) formée par une réaction de réticulation d'un composant réticulable conçu pour être réticulé avec un catalyseur de réticulation;
**caractérisé en ce que** ladite résine époxy (10) a une dureté Shore A finale comprise entre 30 et 100 et **en ce que** ladite résine époxy (10) a une viscosité comprise entre 180 et 50 000 mPa·s à température ambiante et avant la réaction de réticulation.

2. Article (1) selon la revendication 1, **caractérisé en ce que** ladite résine époxy (10) a une dureté Shore A finale comprise entre 40 et 90.

3. Article (1) selon la revendication 1, **caractérisé en ce que** ladite résine époxy (10) comprend un composant réticulable qui est à base de bisphénol A.

4. Article (1) selon la revendication 3, **caractérisé en ce que** ladite résine époxy (10) comprend un composant réticulable qui est à base d'éther diglycidylique de bisphénol A.

5. Article (1) selon la revendication 1, **caractérisé en ce que** ledit catalyseur de réticulation est une amine, de préférence une polyétheramine.

6. Article selon la revendication 1, **caractérisé en ce que** ledit élément de renforcement (3) est choisi dans le groupe des fibres synthétiques comprenant le Kevlar^{®} et le Zylon^{®}.

7. Article selon la revendication 1, **caractérisé en ce que** ledit élément de renforcement (3) est un tissu en fibres de carbone.

8. Article selon la revendication 1, **caractérisé en ce que** ledit élément de renforcement (3) est choisi dans le groupe de fibres naturelles comprenant les fibres de lin, les fibres de chanvre, les fibres de jute, les fibres de bambou, les fibres de noix de coco, les fibres de coton et les fibres de sisal.

9. Élément de travail intermédiaire pour la fabrication par moulage d'un article (1) avec un profil tridimensionnel en matériau composite, élément intermédiaire qui comprend :
- au moins un élément de renforcement (3) choisi dans le groupe comprenant la fibre de carbone, la fibre de verre, la fibre de basalte, la fibre de bore, les fibres synthétiques, les fibres artificielles et les fibres naturelles ;
- un composant d'une résine époxy (10) conçu pour être réticulé et un catalyseur pour la réticulation dudit composant réticulable;
dans lequel ledit élément de renforcement (3) est imprégné dudit composant réticulable et dudit catalyseur de réticulation avant l'étape de moulage;
**caractérisé en ce que** ladite résine époxy (10) a une dureté Shore A finale comprise entre 30 et 100 et **en ce que** ladite résine époxy (10) a une viscosité comprise entre 180 et 50 000 mPa·s à température ambiante et avant la réaction de réticulation.

10. Procédé de fabrication d'un article (1) avec un profil tridimensionnel en matériau composite, procédé qui comprend les étapes suivantes consistant à:
a) fournir au moins un élément de renforcement (3) choisi dans le groupe comprenant la fibre de carbone, la fibre de verre, la fibre de basalte, la fibre de bore, les fibres synthétiques, les fibres artificielles et les fibres naturelles et un composant réticulable avec un catalyseur de réticulation ; le composant réticulable et le catalyseur étant conçus pour former une résine époxy (10);
b) imprégner l'élément de renforcement (3) d'un mélange dudit composant réticulable et dudit catalyseur de réticulation;
c) réticuler ledit composant réticulable de la résine époxy (10) à l'intérieur d'une cavité d'un moule (2) qui est façonné selon la forme de l'article (1) à fabriquer;
d) retirer l'article (1) de la cavité du moule (2);
**caractérisé en ce que** ladite résine époxy (10) formée dans ladite étape c) de réticulation a une dureté Shore A finale comprise entre 30 et 100 et
**en ce que** ladite résine époxy (10) a une viscosité comprise entre 180 et 50 000 mPa.s à température ambiante et avant la réaction de réticulation.

11. Procédé selon la revendication 10, **caractérisé en ce que** la résine époxy (10) formée dans ladite étape c) de réticulation a une dureté Shore A comprise entre 40 et 90.

12. Procédé selon la revendication 10, **caractérisé en ce que** ladite étape d'imprégnation est effectuée sur la partie plate à l'extérieur dudit moule (2), en utilisant une ligne d'imprégnation, pour former un élément de travail intermédiaire, une étape e) de chargement de l'élément intermédiaire dans la cavité dudit moule (2) avant ladite étape c) de réticulation étant prévue.

13. Procédé selon la revendication 10, **caractérisé en ce que** ladite étape b) d'imprégnation est effectuée à l'intérieur de la cavité du moule (2), une étape e) de chargement de l'élément de renforcement (3) dans la cavité du moule avant ladite étape b) d'imprégnation étant prévue.

14. Procédé selon la revendication 10, **caractérisé en ce que**, avant ladite étape b) d'imprégnation, une étape f) de préformage dudit élément de renforcement (3) est prévue.
